(19) Europäisches Patentamt
European Patent Office
Office européen des brevets

(11) **EP 2 017 372 A1**

(12) **EUROPÄISCHE PATENTANMELDUNG**

(43) Veröffentlichungstag:
**21.01.2009 Patentblatt 2009/04**

(51) Int Cl.:
*C25B 1/04* (2006.01)    *H01M 8/06* (2006.01)
*H01M 8/08* (2006.01)

(21) Anmeldenummer: **07014272.4**

(22) Anmeldetag: **20.07.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(71) Anmelder: **EEC GmbH**
**65926 Frankfurt (DE)**

(72) Erfinder: **Nohl, Klaus**
**65926 Frankfurt (DE)**

(74) Vertreter: **Luderschmidt, Schüler & Partner**
**Patentanwälte**
**John-F.-Kennedy-Strasse 4**
**65189 Wiesbaden (DE)**

(54) **Verfahren zur temporären Speicherung elektrischer Energie**

(57)    Verfahren zur temporären Speicherung elektrischer Energie, bei welchem man
(i) eine Wasser enthaltende Zusammensetzung in mindestens einer Elektrolysezelle elektrolysiert und Wasserstoff und Sauerstoff bildet,
(ii) den Wasserstoff und den aus Schritt (i) zumindest teilweise temporär speichert,
(iii) den Wasserstoff und den Sauerstoff aus Schritt (ii) zumindest teilweise in einer Brennstoffzelle zu Wasser umsetzt und die dabei freigesetzte elektrische Energie zumindest teilweise abgreift,

wobei man den Elektrolyt der Elektrolysezelle zumindest teilweise in der Brennstoffzelle verwendet und zweckmäßigerweise den verwässerten Elektrolyt oder das dort gebildete Wasser wieder der Elektrolysezelle zuführt.

EP 2 017 372 A1

**Beschreibung**

Die vorliegende Erfindung betrifft ein Verfahren zur temporären Speicherung elektrischer Energie, insbesondere unter Verwendung eines Wasserstoffkreislaufs.

Zur temporären Speicherung elektrischer Energie werden üblicherweise Batterien und Akkumulatoren (Akku) verwendet. Hierbei handelt es sich um elektrochemische Energiespeicher, die bei der Entladung gespeicherte chemische Energie durch eine elektrochemische Redoxreaktion in elektrische Energie umwandeln. Die umgewandelte Energie kann dann von einem Stromnetz unabhängigen elektrischen Verbraucher genutzt werden.

Durch Umkehrung der elektrochemischen Redoxreaktion kann die Batterie grundsätzlich wieder aufgeladen werden, wobei jedoch die Leistung der Batterie nach dem Wiederaufladen geringer ist als am Anfang. In der Praxis bedeutet dies, dass die Batterien nur eine begrenzte Anzahl von Entlade- und Wiederaufladezyklen durchlaufen können, bevor sie endgültig ausgetauscht und entsorgt werden müssen.

Die meist verwendeten Akku-Typen sind der NiCd- und der Blei-Akku. Diese Typen sind recht robust, aber auch recht schwer. Gegenüber anderen Akkus haben sie einen geringen Energiegehalt und den so genannten Memory-Effekt. Dieses Phänomen - erkennbar an den metallischen Kristallen, die sich an der negativen Elektrode bilden - beschreibt die Verringerung der verfügbaren Batterie-Kapazität, die entweder durch das nicht vollständige Entladen des Akkus oder durch ständiges Dauerladen verursacht wird. Folge ist, dass der Akku nur noch für kurze Zeit Strom liefert und an Leistungsfähigkeit verliert.

Eine Weiterentwicklung des NiCd-Akkus ist der NiMH - Akku. Er hat eine höhere Leistungsdichte, aber eine geringere Belastbarkeit. Was beim NiCd - Akku der Memory-Effekt ist beim Nickel/Metallhybrid Akku der so genannte Lazy-Batterie-Effekt. Er ist ebenfalls an den Ablagerungen an der Negativelektrode erkennbar, äußert sich aber nicht direkt in einer verminderten Kapazität, sondern in einer etwas geringeren Spannung der Zelle.

Beim dritten Typ, dem so genannten Li-Ionen - Akku, ist die Selbstentladung geringer und es gibt weder Memory- noch Lazy-Batterie-Effekt. Allerdings erfordert er eine besondere Ladetechnik mit einem speziellen Zellenmanagement. Dieser Akku-Typ ist recht empfindlich gegenüber der Tiefenentladung (gfls. Komplettzerstörung der Zellen) und weist eine geringe Belastbarkeit auf.

Bei richtiger Pflege und Lagerung der Akkus geben Hersteller die Lebensdauer für Nickel/Cadmium und Nickel/Metallhybrid-Batterien mit ca. 2-4 Jahren ab Herstellung/Inbetriebnahme an - Lithium-Ionen Akkus können auch 4-5 Jahre halten.

Zur Speicherung von Strom - vorzugsweise aus regenerativen Energien - sind wegen der hohen Wechselbelastung nur Blei-Akkus geeignet. Bei netzunabhängigem Einsatz können die Akkus nicht vollständig und gleichmäßig be- und entladen werden. Dies führt zu erheblichen Kapazitätsverlusten und zur deutlichen Reduzierung der Nutzungsdauer auf deutlich unter 2 Jahren. Bei einer Solaranlage mit einer Leistung von 5 kW/h müssen bis zu 40 kW pro Zyklus gespeichert werden. Ein entsprechender Akku würde dann mehr als 1,2 Tonnen wiegen und heute mehr als 8.000 € kosten. Davon abgesehen bedeutet eine solche Lösung einen immensen Bedarf an Ressourcen und Energie zur Produktion der Akkus.

Die Elektrolyse von Wasser zur Herstellung von Wasser ist bereits seit langem bekannt.

Ebenfalls bekannt sind Brennstoffzellen, in denen die Elektrolysereaktion umgedreht und Wasserstoff mit Sauerstoff zu Wasser umgesetzt wird. Hierbei sind insbesondere Polymer-Elektrolyt-Brennstoffzellen von Bedeutung, die gegenüber Verunreinigungen in den einzusetzenden Gasen vergleichsweise unempfindlich sind und die Verwendung von Gasgemischen, wie z. B. Luft erlauben. Der für die Brennstoffzelle benötigte Wasserstoff wird üblicherweise dezentral hergestellt und mit hohem logistischen Aufwand zum Verbraucher, in diesem Fall die Brennstoffzelle, transportiert. Alkalische Brennstoffzellen haben einen erhöhten logistischen Aufwand, da neben Wasserstoff auch Sauerstoff zum Betrieb benötigt wird. Zusätzlich entsteht beim Betrieb Wasser, welches den Elektrolyten verdünnt. Dieser muss dann immer wieder mit großem Aufwand an Arbeit und Energie aufkonzentriert werden.

In Anbetracht dieses Standes der Technik liegt der vorliegenden Erfindung die Aufgabe zugrunde, bessere Möglichkeiten zur temporären Speicherung von elektrischer Energie aufzuzeigen. Dabei wurde eine vergleichsweise einfache und kosteneffiziente Lösung angestrebt, die gleichzeitig möglichst energieeffizient und umweltschonend ist und möglichst wenig Ressourcen benötigt. Dabei sollten die Nachteile des Standes der Technik nach Möglichkeit vermieden werden.

Gelöst werden diese, sowie weitere Aufgaben, die sich aus den zuvor diskutierten Zusammenhängen ableiten lassen, durch ein Verfahren zur temporären Speicherung von elektrischer Energie mit allen Merkmalen des vorliegenden Patentanspruchs 1. Besonders vorteilhafte Abwandlungen des Verfahrens werden in den auf Anspruch 1 rückbezogenen Ansprüchen beschrieben.

Dadurch dass man ein Verfahren zur temporären Speicherung elektrischer Energie einsetzt, bei welchem man

(i) eine Wasser-enthaltende Zusammensetzung in mindestens einer Elektrolysezelle elektrolysiert und Wasserstoff und Sauerstoff bildet,

(ii) den Wasserstoff und den Sauerstoff aus Schritt (i) zumindest teilweise temporär speichert,

(iii) den Wasserstoff und den Sauerstoff aus Schritt (ii) zumindest teilweise in einer Brennstoffzelle zu Wasser umsetzt und die dabei freigesetzte elektrische Energie zumindest teilweise abgreift,

wobei man den Elektrolyt der Elektrolysezelle zumindest teilweise in der Brennstoffzelle verwendet und zweckmäßigerweise dann wieder zumindest teilweise der Elektrolysezelle zuführt, gelingt es auf überraschende Art und Weise, eine vergleichsweise einfache und kostengünstige temporäre Speicherung von elektrischer Energie zu ermöglichen, die äußerst energieeffizient und umweltschonend ist und vergleichsweise wenig Ressourcen benötigt. Die zuvor beschriebenen Nachteile des Standes der Technik werden vermieden und das erfindungsgemäße Verfahren erlaubt insbesondere wiederholte Lade- und Entladevorgänge ohne Leistungsabfall. Daher eignet sich das erfindungsgemäße Verfahren insbesondere für solche Anwendungen, bei denen wiederaufladbare Batterien benötigt werden.

Das erfindungsgemäße Verfahren zeichnet sich durch einen sehr hohen Wirkungsgrad aus und kann als Grundlage für Insellösungen zur Stromversorgung dienen. Dabei wird die Primärenergie vorzugsweise aus regenerativen Energien gewonnen. Beim Einsatz als Blockheizkraftwerk (BHKW) ist der Anteil der erzeugten elektrischen Energie wesentlich höher als bei herkömmlichen BHKW's. Weiterhin eignet sich das erfindungsgemäße Verfahren auch zur Speicherung von "überschüssigem Strom aus regenerativen Energien". Insbesondere Spitzenströme können bei Bedarf zwischengespeichert werden.

Die vorliegende Erfindung betrifft die temporäre (vorübergehende) Speicherung elektrischer Energie,

Bei dem erfindungsgemäßen Verfahren wird zunächst eine wasserenthaltende Zusammensetzung in mindestens einer Elektrolysezelle elektrolysiert und eine wasserstoffhaltige Zusammensetzung und eine sauerstoffhaltige Zusammensetzung gebildet. Hierunter ist die durch elektrischen Strom bewirkte Zersetzung einer Wasserhaltigen Zusammensetzung gemäß der folgenden Reaktionsgleichung zu verstehen:

$$2\,H_2 \rightarrow 2\,H_2 + O_2$$

Eine für die vorliegenden Zwecke geeignete Elektrolysezelle umfasst mindestens zwei Elektroden und ein Elektrolyt. Elektroden sind bereits seit langem bekannt und bezeichnen elektronenleitende Werkstoffe, die zur Elektrolyse von Elektrolyten eingesetzt werden können. Bei der Elektrolyse wird durch Anlegen einer äußeren Spannung eine chemische Reaktion im Elektrolyten erzwungen, die zwei Teilreaktionen, Oxidation an der Kathode und Reduktion an der Anode, umfasst. So gehen bei der Elektrolyse von Wasser an der Kathode die Wasserstoff-Ionen ($H^+$) durch Aufnahme von Elektronen (aus dem Stromkreis) in neutrale Atome über, die sich paarweise zu $H_2$-Molekülen vereinigen und als Gas entweichen. Umgekehrt verlieren gleichzeitig die Hydroxid-Ionen ($OH^-$) an der Anode ihre negative Ladung. Die abgegebenen Elektronen werden durch die Stromquelle zur Kathode geleitet, während sich die gebildeten Sauerstoffatome zu $O_2$-Molekülen vereinigen und ebenfalls als Gas entweichen. Die übrig bleibenden $H^+$-Ionen werden umgehend von Hydroxid-Ionen zu Wasser-Molekülen neutralisiert. Diese Redoxreaktion erfolgt jedoch nur dann, wenn die an den Elektroden angelegte Spannung größer ist als die von den einzelnen Redoxpotentialen abhängige Zersetzungsspannung,

Im Rahmen der vorliegenden Erfindung weist die Elektrode zweckmäßigerweise ein für die Elektrolyse von Wasser geeignetes Material, vorzugsweise ein Metall und/oder Graphit, insbesondere Kupfer, Silber, Blei, Quecksilber, Platin, Palladium, Gold, Nickel, Graphit und/oder Eisen, auf.

Weiterhin ist die Oberfläche der Elektrode vorzugsweise derart ausgebildet, dass sie bei angelegter Spannung mindestens zwei innenliegende Bereiche mit unterschiedlicher Ladungsdichte aufweist. Unter der Ladungsdichte versteht man das Verhältnis der Ladung zur Größe der geladenen Fläche. Demzufolge ist die Ladungsverteilung auf der Oberfläche ungleichmäßig (inhomogen), wobei die Ränder, d. h. die Begrenzungen der Elektrode in diesem Zusammenhang nicht berücksichtigt werden. Im Rahmen einer bevorzugten Variante der vorliegenden Erfindung kann an jeden Punkt des oder der Ränder der Elektrode mindestens eine Ebene angelegt werden, ohne dass die Elektrode die Ebene an einem anderen Punkt schneidet. Berührungen der Elektrode mit der Ebene sind jedoch möglich.

Die Ladungsverteilung auf der Oberfläche wird zweckmäßigerweise unter für die Elektrolyse von wasserhaltigen Elektrolyten üblichen Bedingungen bestimmt. Zweckmäßigerweise werden zwei Elektroden in einen Elektrolyten eingetaucht, miteinander verbunden und eine Gleichspannung von 1,7 V und 0,6 A angelegt. Als Elektrolyt wird bevorzugt eine wässrige KOH-Lösung mit einem pH von >10 eingesetzt. Die Elektrolyse wird besonders bevorzugt bei 20°C und 1033 mbar durchgeführt.

Die Inhomogenität der Ladungsverteilung auf der Oberfläche ist vorzugsweise derart, dass die Ladungsdichte des Bereichs mit größerer Ladungsdichte mindestens 10 %, bevorzugt mindestens 20 %, besonders bevorzugt mindestens 50 %, insbesondere mindestens 100 %, größer als die Ladungsdichte des Bereichs mit geringerer Ladungsdichte ist.

Die konkrete Form der Elektrode ist grundsätzlich von untergeordneter Bedeutung. Zweckmäßigerweise umfasst ihre Oberfläche mindestens eine innenliegende gekrümmte Teilfläche, bei welcher der erste Hauptkrümmungsradius an mindestens einer Stelle kleiner 8 mm ist und der zweite Hauptkrümmungsradius der Fläche an dieser Stelle vorzugsweise kleiner 1 mm ist.

Hierbei wird ein kartesisches Koordinatensystem derart zugrunde gelegt, dass die betrachtete Stelle im Ursprung liegt und die x,y-Ebene mit der Tangentialebene durch diesen Punkt übereinstimmt. In diesem System besitzt die Fläche in der Umgebung des betrachteten Punkts $P_0$ die Darstellung

$$z=z(x,y) \text{ mit } z(0,0) = \partial z(0,0)/ \partial x = \partial(0,0)/ \partial y = 0.$$

Das zugehörige begleitende Dreibein im Punkt $P_0$ besteht aus den drei Einheitsvektoren $e_1$, $e_2$, $N = e_1 \times e_2$, die in Richtung der Koordinatenachsen weisen. Die Taylorentwicklung in der Umgebung von $P_0$ lautet

$$z = \tfrac{1}{2} \partial^2 z(0,0)/ \partial x^2 + \partial^2 z(0,0)/ \partial x \partial y + \tfrac{1}{2} \partial^2 z(0,0)/ \partial y^2 + \ldots$$

Durch Drehung des Koordinatensystems um die z-Achse kann man

$$z = \tfrac{1}{2} (k_1 x^2 + k_2 y^2) + \ldots$$

erreichen. Man definiert:

| | |
|---|---|
| $k_1$, $k_2$ | Hauptkrümmungen |
| $R_1 = 1/k_1$ | erster Hauptkrümmungsradius |
| $R_2 = 1/k_2$ | zweiter Hauptkrümmungsradius |
| $K = k_1 k_2$ | Gaußsche Krümmung |
| $H = \tfrac{1}{2} (k_1 + k_2)$ | mittlere Krümmung im Punkt $P_0$. |

Für weitere Details wird auf die gängige Fachliteratur, z. B. auf I. N. Bronstein, K. A. Semendjajew Taschenbuch der Mathematik 24. Auflage, Teubner, 1989, S. 603 ff. verwiesen.

Im Rahmen einer besonders bevorzugten Ausführungsform der Erfindung umfasst die Oberfläche der Elektrode mindestens zwei, besonders bevorzugt mindestens drei voneinander verschiedene Teilflächen, die sich in mindestens einem innenliegenden Punkt schneiden. Bevorzugt haben die Teilflächen eine unterschiedliche räumliche Ausrichtung und/oder sind unterschiedlich gekrümmt. Die Schnittgerade von zwei vorzugsweise nicht-gekrümmten Teilflächen wird üblicherweise als Kante und der Schnittpunkt von mindestens 3 vorzugsweise nicht-gekrümmten Teilflächen allgemein als Ecke bezeichnet.

Zweckmäßigerweise umfasst die Elektrode mindestens eine, bevorzugt mindestens zwei, besonders bevorzugt mindestens 5 innenliegende Aussparung(en), die vorzugsweise mindestens eine nicht gekrümmte Kante aufweist (aufweisen) und ganz besonders bevorzugt als rechteckige Aussparung der Elektrode ausgebildet ist (sind). Im Rahmen einer besonders günstigen Ausführungsform der vorliegenden Erfindung ist die Aussparung eine Öffnung durch die Elektrode.

In der Elektrolysezelle wird die Elektrode dann zweckmäßigerweise derart angeordnet, dass die nicht-gekrümmte Kante der Aussparung, bei mehreren nicht-gekrümmten Kanten vorzugsweise die längste Kante der Aussparung, nichtsenkrecht zum Schwerevektor (Lot) des Erdschwerefeldes steht, so dass sich die Gasbläschen leichter von der Elektrodenkante lösen, weil sie von anderen, aufsteigenden Gasbläschen mitgerissen werden. Die üblicherweise notwendige elektrische Energie zur Desorption der Gasbläschen wird durch die Ausnutzung des Erdschwerefeldes drastisch verringert. Der Winkel zwischen der Kante und dem Schwerevektor ist günstiger weise möglichst klein und liegt vorzugsweise im Bereich von 0° bis 30°, bevorzugt im Bereich von 0° bis 15°, besonders bevorzugt im Bereich von 0° bis 5°, ganz besonders bevorzugt zwischen 0° und 0,5° und ist bei der am meisten bevorzugten Ausführungsform gleich 0.

Mindestens eine Aussparung ist günstiger weise mindestens 3 mm, bevorzugt mindestens 5 mm, besonders bevorzugt mindestens 15 mm lang und mindestens 1 mm, bevorzugt mindestens 2 mm, besonders bevorzugt mindestens 3 mm breit, wobei grundsätzlich auf die maximale Länge und Breite der Aussparung abzustellen ist. Die Tiefe der Aussparung, die im Falle eines Lochs der Dicke der Elektrode an dieser Stelle entspricht, ist vorzugsweise mindestens 0,1 mm, bevorzugt mindestens 0,2 mm, besonders bevorzugt mindestens 0,3 mm. Auch hier ist auf den Maximalwert abzustellen.

Im Rahmen einer weiteren besonders bevorzugten Variante der vorliegenden Erfindung umfasst die Elektrode mindestens einen Zinken, d. h. mindestens eine hervorstehende Spitze, die sich beispielsweise kegelförmig oder pyramidenförmig nach außen erstreckt. Die Verwendung von mehreren Zinken, vorzugsweise von mindestens 5, insbesondere von mindestens 16 Zinken hat sich im Rahmen der vorliegenden Erfindung besonders bewährt.

Die Länge der Zinken soll vorzugsweise mindestens 0,1 mm, bevorzugt mindestens 0,5 mm, insbesondere mindestens 1 mm betragen. Weiterhin sollte das Verhältnis von Länge des Zinkens zum maximalen Durchmesser des Zinkens bevorzugt größer 5:1, vorzugsweise größer 10:1, insbesondere größer 20:1 sein. Der maximale Durchmesser des Zinkens sollte vorzugsweise kleiner 1,0 mm, bevorzugt kleiner 0,5 mm, insbesondere kleiner 0,1 mm gewählt werden.

Darüber hinaus ist es für die Zwecke der vorliegenden Erfindung besonders günstig, wenn bei der Verwendung von mehreren Zinken die Spitzen der Zinken nicht miteinander in Kontakt stehen und vorzugsweise mindestens 0,1 mm voneinander beabstandet sind.

Die Oberflächendichte der Zinken kann prinzipiell in Abhängigkeit von den jeweiligen Elektrolysebedingungen frei gewählt werden. Allerdings haben sich Elektroden mit mindestens 16 Zinken pro $cm^2$ Oberfläche des Elektrodengrundkörpers erfindungsgemäß ganz besonders bewährt.

Die konkrete Form der Zinken ist grundsätzlich von nachrangiger Bedeutung. Jedoch werden im Rahmen der vorliegenden Erfindung bevorzugt Elektroden mit nicht gekrümmten Oberflächen und sich nach außen hin im Durchmesser verjüngenden Zinken eingesetzt.

Im Rahmen einer ganz besonders bevorzugten Ausführungsform der vorliegenden Erfindung hat die Elektrode die Form eines Zylinders, dessen Oberfläche derart ausgebildet ist, dass sie bei angelegter Spannung mindestens zwei innenliegende Bereiche mit unterschiedlicher Ladungsdichte aufweist, Die Länge und der Durchmesser des Zylinders können an sich beliebig gewählt werden. Besonders bevorzugt werden jedoch fadenähnliche Zylinder mit einem Durchmesser kleiner 5 mm, zweckmäßigerweise kleiner 2 mm, insbesondere kleiner 1 mm. Der minimale Durchmesser beträgt vorzugsweise mindestens 0,1 mm, besonders bevorzugt mindestens 0,3 mm, insbesondere mindestens 0,5 mm. Das Verhältnis von Länge zu Durchmesser des Zylinders ist weiterhin vorzugsweise im Bereich von 10000:1 bis 1:1, insbesondere im Bereich von 2500:1 bis 10:1.

Die Elektrode wird zur Elektrolyse von wasserhaltigen Elektrolyten, wie z. B. wässrige NaOH, verwendet. Eine für diese Zwecke bevorzugte Elektrolysezelle umfasst mindestens zwei erfindungsgemäße Elektroden, wobei eine als Kathode geschaltet ist. Dabei enthält die Kathodenoberfläche vorzugsweise ein Material aus der folgenden Reihe,

Pd- Au -Pt-Ag-Ni-C (Graphit) - Fe-Cu-Pb- Hg

wobei die Materialien gemäß ihrer Eignung angeordnet sind (links am besten).

Die Anodenoberfläche enthält vorzugsweise ein Material aus der folgenden Reihe,

Ni - Fe - Cu - Pb - Ag - Pd - Pt - Au

wobei die Materialien gemäß ihrer Eignung angeordnet sind (links am besten).

Der Kathodenraum und der Anodenraum sind zweckmäßigerweise durch eine gasdichte Membran, das sogenannte Diaphragma, voneinander getrennt, die zwar den notwendigen Transport von $OH^-$-Ionen zulässt, gleichzeitig jedoch die Vermischung der Produktgase verhindert. Für diese Zwecke geeignete Membranen sind aus dem Stand der Technik hinlänglich bekannt.

In diesem Zusammenhang hat es sich als ganz besonders günstig erwiesen, eine Membran-Elektrodeneinheit zu verwenden, die mindestens zwei erfindungsgemäße Elektroden umfasst, die durch die Membran voneinander getrennt werden. Dabei weisen die Elektroden zweckmäßigerweise jeweils mindestens eine Öffnung auf, die auf der einen Seite mit dem Elektrolyt und auf der anderen Seite mit der Membran in Verbindung steht und so den Transport der Ionen durch die Öffnungen der Elektrode und die Membran zulässt. Die Position der Öffnungen in den Elektroden sollte weiterhin vorzugsweise derart sein, dass, wenn man die Membran (gedanklich) entfernt, die Öffnungen der beiden Elektroden unmittelbar miteinander in Kontakt sind.

Die wasserhaltige Zusammensetzung dient als Elektrolyt und unterliegt grundsätzlich keinen weiteren Beschränkungen, Es kann an sich jeder Elektrolyseur - der im Betrieb Wasser verbraucht und sich dadurch aufkonzentriert - in Kombination mit jedem Brennstoffzellentyp - der im Betrieb Wasser bildet, das dem Elektrolyseur zugeführt werden kann oder sich dadurch verdünnt - eingesetzt werden. Denkbar ist z. B. ein saurer Elektrolyseur in Kombination mit einer PEM-Brennstoffzelle. Hier wird das in der PEM-Brennstoffzelle gebildete Wasser - zur Verdünnung des aufkonzentrierten Elektrolyten - wieder dem Elektrolyseur zugeführt,

Für die Zwecke der vorliegenden Erfindung besonders geeignete Elektrolyte weisen jedoch einen pH-Wert größer 10, bevorzugt größer 11, besonders bevorzugt größer 12, insbesondere größer 13, gemessen bei der Elektrolysetemperatur auf. Ganz besonders bevorzugt wird eine bis zu 40 %ige Kalilauge eingesetzt. Im Rahmen einer weiteren besonders bevorzugten Ausführungsform der Erfindung wird eine wässrige Lösung mit einem pH-Wert im Bereich von 11 bis 13, gemessen bei der Elektrolysetemperatur, eingesetzt.

Bei der Elektrolyse wird günstiger weise eine Gleichspannung von mindestens 1,23 Volt, besonders bevorzugt von mindestens 1,5 Volt angelegt, um die Zersetzung des Wassers zu induzieren.

Zur weiteren Effizienzsteigerung können mehrere derartige Elektrolysezellen ggf. zusammengeschaltet werden.

Darüber hinaus hat es sich für die Zwecke der vorliegenden Erfindung besonders bewährt, eine gepulste Gleichspannung während der Elektrolyse anzulegen, um so die Desorption des Wasserstoffs zusätzlich zu erleichtem. Die gepulste Gleichspannung, auch Pulsstrom genannt, wird vorzugsweise durch Pulsgleichrichter, Potentiostaten oder Galvanostaten erzeugt und besteht aus einzelnen Pulssequenzen, die sowohl anodische als auch kathodische Ströme, sowie Pulspausen umfassen können. Grundsätzlich können die verschiedensten Pulsformen eingesetzt werden, wobei jedoch Rechteckpulse für die Zwecke der vorliegenden Erfindung ganz besonders günstig sind. Besonders bevorzugte Pulsfrequenzen liegen im Bereich von 0,2 Hz bis 800 Hz. Das Pausen-Pulsverhältnis wird bei parallel betriebenen Generatoren vorzugsweise im Bereich von 1:1000 bis 1000:1, besonders bevorzugt im Bereich von 1:100 bis 100:1 gewählt. Die Pulsstromstärke und die Pulsspannung werden wie bei der Gleichspannungsanordnung eingestellt.

Um den Verlust in der Steuerung möglichst gering zu halten, werden vorzugsweise zwei Generatoren parallel betrieben, zwischen denen hin und her geschaltet wird.

Weiterhin ist es vorteilhaft, die Gleichspannungspulse mit einer Hochfrequenz zu überlagern, um die Ionen weiter anzuregen und die Entladung weiter zu fördern. Hochfrequenz bezeichnet in diesem Zusammenhang eine Wechselspannung hoher Frequenz, die vorzugsweise zwischen 2.000 Hz (2 kHz) und 5.000.000 Hz (5 MHz) liegt.

Grundsätzlich kann die Elektrolyse sowohl bei Normal-, Unter- oder Überdruck erfolgen. Weiterhin kann auch die Temperatur prinzipiell beliebig gewählt werden, wobei sich Temperaturen im Bereich von 5°C bis 95°C ganz besonders bewährt haben.

Durch die Elektrolyse wird der Elektrolyt aufkonzentriert, da sein Wassergehalt reduziert wird.

Der bei der Elektrolyse gebildete Wasserstoff und Sauerstoff wird zumindest teilweise temporär gespeichert. Hierfür können an sich bekannte Vorrichtungen aus dem Stand der Technik verwendet werden.

Zur Freisetzung der elektrischen Energie wird der Wasserstoff und der Sauerstoff dann zumindest teilweise in einer Brennstoffzelle zu Wasser umgesetzt und die dabei freigesetzte elektrische Energie zumindest teilweise abgegriffen. Das erfindungsgemäße Verfahren zeichnet sich dabei dadurch aus, dass man den Elektrolyt der Elektrolysezelle zumindest teilweise in der Brennstoffzelle verwendet.

Durch das entstehende Wasser wird der Elektrolyt verdünnt. Dies ermöglicht seine erneute Verwendung in der Elektrolysezelle. Daher wird in einer besonders bevorzugten Variante der vorliegenden Erfindung die Elektrolysezelle und die Brennstoffzelle zur wiederholten Speicherung elektrischer Energie eingesetzt, wobei der Elektrolyt der Elektrolysezelle zumindest teilweise in der Brennstoffzelle und das Elektrolyt der Brennstoffzelle zumindest teilweise in der Elektrolysezelle verwendet wird.

**Patentansprüche**

1. Verfahren zur temporären Speicherung elektrischer Energie, bei welchem man

   (i) eine Wasserenthaltende Zusammensetzung in mindestens einer Elektrolysezelle elektrolysiert und Wasserstoff und Sauerstoff bildet,
   (ii) den Wasserstoff und den Sauerstoff aus Schritt (i) zumindest teilweise temporär speichert,
   (iii) den Wasserstoff und den Sauerstoff aus Schritt (ii) zumindest teilweise in einer Brennstoffzelle zu Wasser umsetzt und die dabei freigesetzte elektrische Energie zumindest teilweise abgreift,

   **dadurch gekennzeichnet, dass** man den Elektrolyt der Elektrolysezelle zumindest teilweise in der Brennstoffzelle verwendet.

2. Verfahren nach Anspruch 1, **dadurch gekennzeichnet, dass** man die Elektrolysezelle und die Brennstoffzelle zur wiederholten Speicherung elektrischer Energie einsetzt, wobei man den Elektrolyt der Elektrolysezelle zumindest teilweise in der Brennstoffzelle und den Elektrolyt der Brennstoffzelle zumindest teilweise in der Elektrolysezelle verwendet.

3. Verfahren nach Anspruch 1 oder 2, **dadurch gekennzeichnet, dass** man den Elektrolyt der Elektrolysezelle zumindest teilweise in die Brennstoffzelle leitet und mit durch die Reaktion (iii) gebildetem Wasser verdünnt,

**4.** Verfahren nach mindestens einem der vorangehenden Ansprüche, **dadurch gekennzeichnet, dass** man den Elektrolyt der Brennstoffzelle zumindest teilweise in die Elektrolysezelle leitet und durch die Elektrolyse (i) aufkonzentriert.

**5.** Verfahren nach mindestens einem der vorangehenden Ansprüche, **dadurch gekennzeichnet, dass** man einen basischen Elektrolyt verwendet.

**6.** Verfahren nach mindestens einem der vorangehenden Ansprüche, **dadurch gekennzeichnet, dass** man einen sauren oder alkalischen Elektrolyseur mit einer Polymer-Elektrolyt-Membran (PEM)-Brennstoffzelle einsetzt, wobei das in der PEM-Brennstoffzelle gebildete Wasser zumindest teilweise dem aufkonzentrierten Elektrolyten des Elektrolyseurs zugeführt wird.

Europäisches
Patentamt

**EUROPÄISCHER RECHERCHENBERICHT**

Nummer der Anmeldung

EP 07 01 4272

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CH 694 443 A5 (PYLKKAENEN THOMAS [CH]) 14. Januar 2005 (2005-01-14) * das ganze Dokument * ----- | 1-6 | INV. C25B1/04 H01M8/06 H01M8/08 |
| A | DE 103 22 781 A1 (SCHLUETER GERD [DE]; LIPSKI HANS-JUERGEN [DE]) 23. Dezember 2004 (2004-12-23) * Abbildung 3 * * Absatz [0019] * ----- | 1-6 | |
| A | DE 198 15 455 A1 (ROSENMAYER VOLKER [DE]) 14. Oktober 1999 (1999-10-14) * Zusammenfassung * * Spalte 1, Zeile 2 - Spalte 2, Zeile 32 * * Spalte 3, Zeile 8 - Zeile 16 * * Ansprüche 1-9 * ----- | 1-6 | |
| A | US 2002/017463 A1 (MERIDA-DONIS WALTER ROBERTO [CA]) 14. Februar 2002 (2002-02-14) * Abbildungen 7,8 * * Seite 8, linke Spalte, Absatz 76 - Seite 11, linke Spalte, Absatz 93 * ----- | 1-6 | RECHERCHIERTE SACHGEBIETE (IPC) C25B H01M |

Der vorliegende Recherchenbericht wurde für alle Patentansprüche erstellt

| Recherchenort | Abschlußdatum der Recherche | Prüfer |
|---|---|---|
| Den Haag | 29. Februar 2008 | Maxisch, Thomas |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument
...........................................................................................................
& : Mitglied der gleichen Patentfamilie, übereinstimmendes
  Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**
EP 07 01 4272

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-02-2008

| Im Recherchenbericht angeführtes Patentdokument | | Datum der Veröffentlichung | Mitglied(er) der Patentfamilie | | Datum der Veröffentlichung |
|---|---|---|---|---|---|
| CH 694443 | A5 | 14-01-2005 | KEINE | | |
| DE 10322781 | A1 | 23-12-2004 | KEINE | | |
| DE 19815455 | A1 | 14-10-1999 | KEINE | | |
| US 2002017463 | A1 | 14-02-2002 | US | 2004013918 A1 | 22-01-2004 |

EPO FORM P0461

Für nähere Einzelheiten zu diesem Anhang : siehe Amtsblatt des Europäischen Patentamts, Nr.12/82